# FASCICULE DE BREVET EUROPEEN

(11) **EP 0 603 025 B1**
(45) Date de publication et mention de la délivrance du brevet: **05.03.1997**
(21) Numéro de dépôt: 93402916.6
(22) Date de dépôt: 01.12.1993
(51) Int. Cl.: F16C 33/76

(54) **Dispositif d'étanchéité pour palier de machine**
Dichtungsvorrichtung für Maschinenlager
Sealing device for machine bearing

(30) Priorité: 16.12.1992 FR 9215165
(43) Date de publication de la demande: 22.06.1994
(73) Titulaire: ETS MENAUT - STE ARMORICAINE DE CONSTRUCTIONS METALLIQUES SACME (Société Anonyme), F-35350 La Gouesniere (FR)
(72) Inventeur: Menaut, Michel, F-35400 Saint-Malo (FR)
(74) Mandataire: Lerner, François

(56) Documents cités:
- FR-A- 1 208 143
- FR-A- 1 566 879
- FR-A- 2 188 046
- FR-A- 2 570 145
- US-A- 2 414 600
- US-A- 3 073 657
- US-A- 4 167 297
- US-A- 4 509 607
- US-A- 5 242 229

## Description

L'invention a pour objet un dispositif d'étanchéité pour palier de machine.

Il existe un problème classique pour nombre de machines tournantes exposées à des conditions extérieures en ambiance non protégée pour réaliser l'étanchéité des paliers afin de protéger les roulements contre les poussières, les intempéries, les projections d'eau, etc ...

L'invention a pour objet un dispositif d'étanchéité perfectionné pour palier de machine recevant un arbre tournant dans un roulement du type comprenant, disposées de chaque côté du roulement dans lequel tourne l'arbre, des garnitures d'étanchéité entourant l'arbre.

Il ne suffit pas en effet de prévoir des garnitures d'étanchéité de chaque côté du roulement, mais encore faut-il les protéger efficacement et permettre leur travail dans de bonnes conditions.

Le brevet US-A-3 073 657 décrit une structure formant palier support tournant de la chenille d'un char qui tourne autour d'un arbre fixe, dans laquelle structure on trouve un arbre reçu dans un roulement et, disposées de chaque côté du roulement, des garnitures d'étanchéité entourant l'arbre, le dispositif comportant :
- un élément extérieur recevant intérieurement le roulement,
- de part et d'autre dudit élément extérieur une pièce formant couvercle de protection des garnitures d'étanchéité comportant, faisant saillie d'un côté, une joue s'engageant en étanchéité dans l'élément extérieur et, faisant saillie de l'autre côté, une paroi de protection des garnitures,
- des garnitures d'étanchéité logées dans un logement formé sous ladite paroi,
- une bague extérieure coopérant avec les garnitures pour les enfermer dans ledit logement.

Mais, dans ce dispositif, la lubrification du roulement étant réalisée sous pression, l'étanchéité parfaite des garnitures vers l'extérieur n'est pas recherchée, ni même souhaitable.

Au contraire, selon l'invention, une étanchéité pour protection des garnitures aussi commode qu'efficace est recherchée.

A cet effet, le dispositif d'étanchéité, pour élément extérieur recevant un arbre dans un roulement comprenant, disposées de chaque côté du roulement, des garnitures d'étanchéité entourant l'arbre, comporte :
- un élément extérieur recevant intérieurement le roulement,
- de part et d'autre dudit élément extérieur une pièce formant couvercle de protection des garnitures d'étanchéité, comportant, faisant saillie d'un côté, une joue s'engageant en étanchéité dans l'élément extérieur et, faisant saillie de l'autre côté, une paroi de protection des garnitures,
- des garnitures d'étanchéité logées dans un logement formé sous ladite paroi,
- une bague extérieure coopérant avec les garnitures pour les enfermer dans ledit logement et se caractérise selon l'invention en ce que, s'agissant d'un dispositif d'étanchéité pour palier de machine recevant un arbre tournant dans un roulement, la bague extérieure coopère en étanchéité avec ladite paroi de protection des garnitures en présentant une paroi qui vient se loger sous la paroi de protection de la pièce formant couvercle de protection des garnitures.

De cette façon, on assure un montage commode des garnitures d'étanchéité et une protection efficace de ces garnitures qui peuvent travailler dans les meilleures conditions de sécurité.

Avantageusement, le dispositif comprend en outre, à l'extérieur desdites bagues extérieures d'étanchéité, une bague d'arrêt desdites bagues d'étanchéité.

Cette bague d'arrêt est de préférence pourvue de moyens de positionnement sur l'axe de la machine et de moyens de réglage permettant de régler le positionnement axial des bagues d'étanchéité extérieures pour les faire coopérer dans les meilleures conditions de travail avec la pièce formant couvercle de protection des garnitures d'étanchéité pour assurer les meilleures conditions de travail desdites garnitures.

D'autres caractéristiques, objets et avantages de l'invention apparaîtront plus clairement à l'aide de la description qui va suivre, faite en référence aux dessins annexés dans lesquels :
la figure 1 montre une vue d'ensemble du dispositif en position assemblée des pièces qui le composent, cette vue étant faite en coupe axiale,
la figure 2 montre en coupe axiale éclatée certaines des pièces illustrées à la figure 1,
la figure 3 est une vue de face faite selon la flèche III d'une des pièces du dispositif illustrée à la figure 2,
la figure 4 est une vue du dessus faite selon la flèche IV de la figure 3 de la pièce illustrée à cette figure (corps de palier),
la figure 5 est une vue de face faite selon la flèche V d'une des pièces du dispositif illustrée à la figure 2 (couvercle de garnitures),
la figure 6 est une vue de face faite selon la flèche VI d'une des pièces du dispositif illustrée à la figure 2 (bague d'arrêt),
la figure 7 montre en coupe axiale le manchon central sur lequel sont montées les diverses pièces du dispositif tel qu'illustré à la figure 1.

En se référant aux dessins, on décrira tout d'abord les diverses pièces qui composent le dispositif de l'invention.

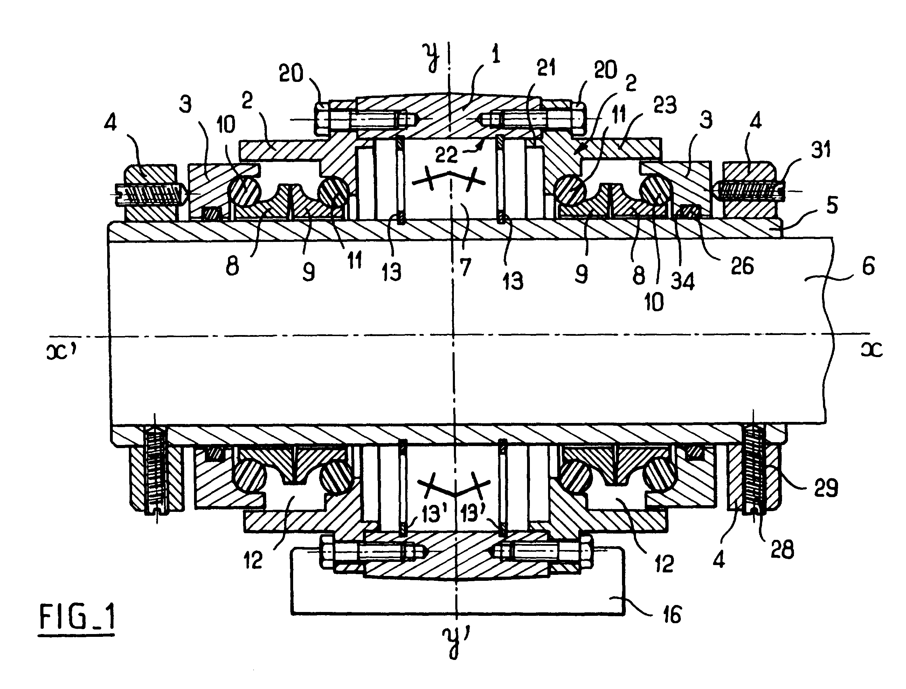

En se référant tout d'abord à la figure 1, on désignera en premier lieu les pièces essentielles qui constituent le dispositif, pièces que l'on aperçoit plus en détail dans les autres figures. On trouve ainsi : en 1 le corps de palier, en 2 les deux couvercles symétriques de garnitures d'étanchéité, en 3 les deux bagues symétriques d'étanchéité, en 4 les deux bagues d'arrêt symétriques, en 5 le manchon central sur lequel est monté le dispositif, en 6 l'arbre de rotation de la machine, en 7 le roulement de palier, en 8 et 9 respectivement les chemins de portée extérieur et intérieur des garnitures d'étanchéité qui portent chacun un joint 10, 11 torique d'étanchéité.

On note plus clairement à la figure 1 que les garnitures d'étanchéité 8, 9, 10 et 11 sont logées dans un logement 12 formé entre la paroi extérieure du manchon 5 et les parois en regard des pièces 2 et 3.

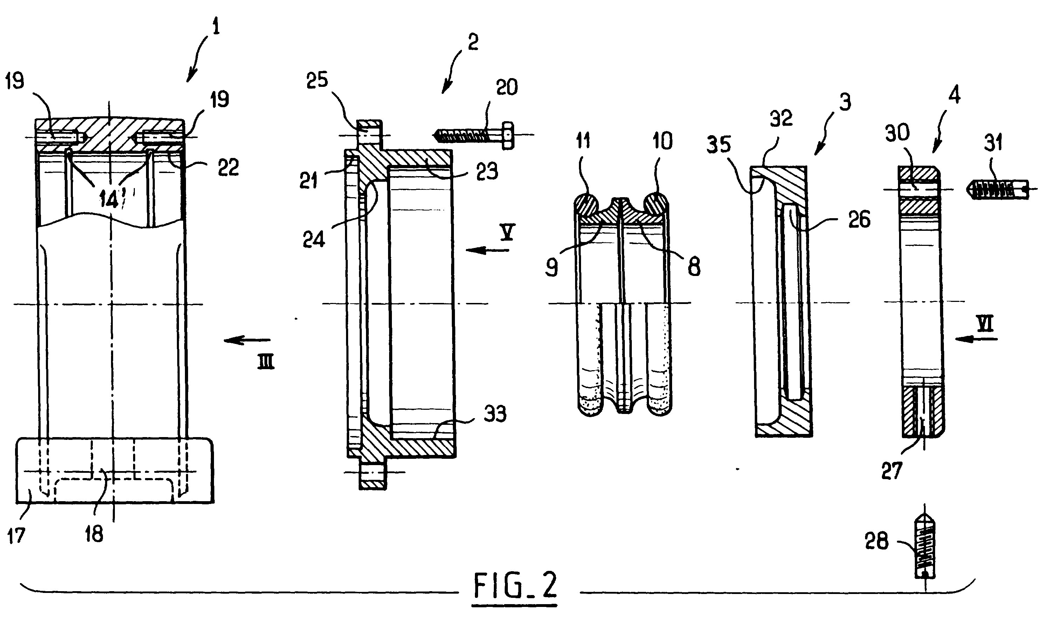

A la figure 1, on aperçoit également les circlips 13 engagés dans des gorges circulaires 14 du manchon 5 et qui assurent le positionnement axial du roulement 7 sur le manchon 5 dans le corps de palier 1, ainsi que des circlips 13' qui assurent de même le positionnement axial du roulement dans le palier 1 qui comporte à cet effet des gorges de réception correspondantes 14' (figure 2).

On note que la construction est symétrique par rapport au plan médian Y' Y du corps de palier 1 perpendiculaire à l'axe X' X du dispositif.

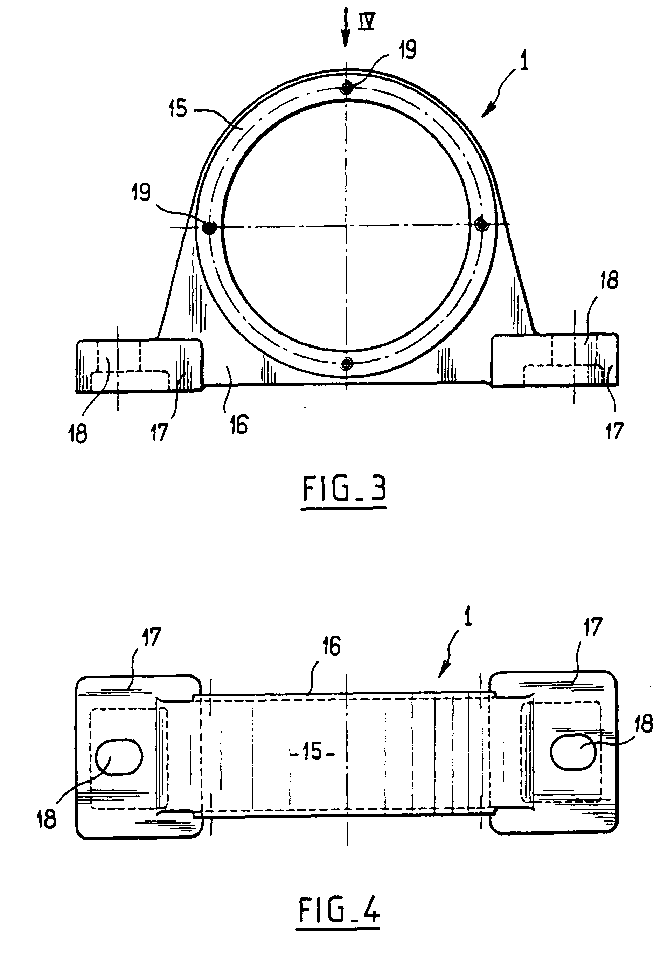

En se référant aux figures 1 à 4, on décrira maintenant plus précisément le corps de palier 1.

Le corps de palier 1 comprend ainsi, outre son corps proprement dit 15 de forme annulaire pour recevoir le roulement 7, une semelle 16 avec deux patins 17 pour la fixation sur un bâti (non représenté) de la machine. Les patins 17 comportent avantageusement à cet effet deux orifices 18 pour le passage des boulons de fixation ou analogues.

On voit également que le corps de palier comporte huit orifices filetés 19 répartis angulairement à 90° les uns des autres tout autour de sa portée sur le manchon 5 et sur chacune de ses faces latérales.

Ces orifices, comme il apparaît plus clairement aux figures 1 et 2, servent à la fixation de vis ou boulons 20 de montage des pièces 2 formant couvercle sur le corps de palier.

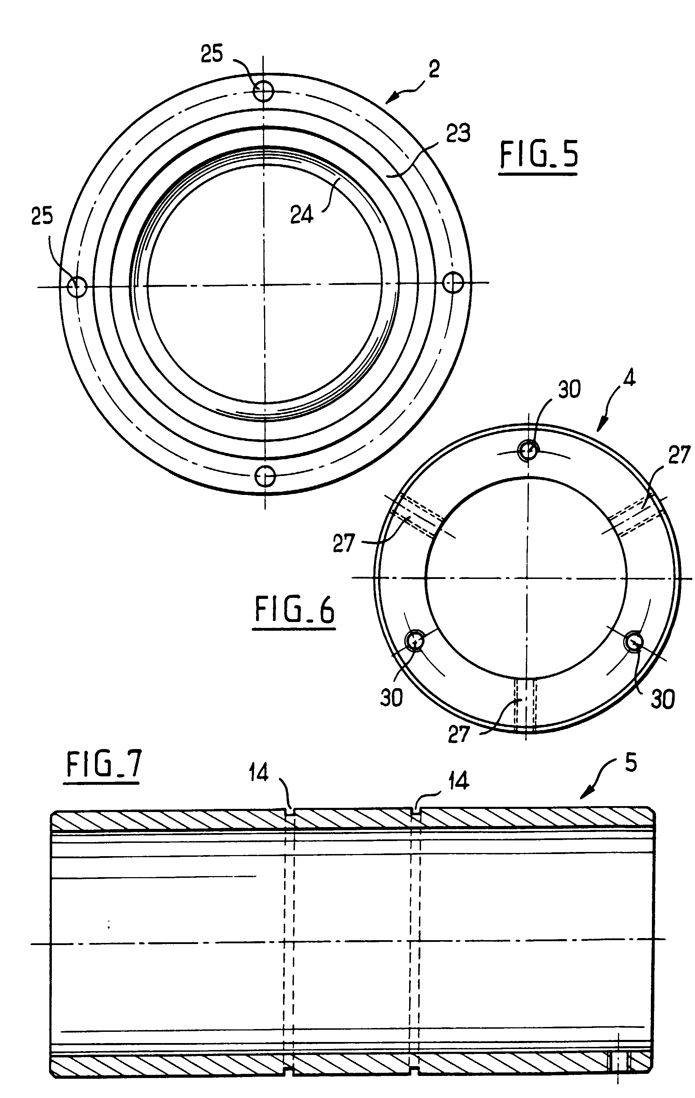

En se référant maintenant aux figures 1, 2 et 5, on décrira plus clairement les deux pièces formant couvercles de protection des garnitures d'étanchéité.

Ces pièces comportent, du côté de leur portée contre le corps de palier 1 une joue 21 faisant saillie qui s'engage en étanchéité dans le corps 1, et plus précisément dans le mode de réalisation illustré à l'intérieur de la paroi cylindrique circulaire 22 du corps de palier 15.

La même pièce 2 comporte de l'autre côté, faisant saillie vers l'extérieur, une paroi 23 de protection des garnitures qui vient les recouvrir comme il apparaît clairement à la figure 1.

La pièce 2 comporte également pour recevoir le joint torique 11 une gorge 24 conformée en arrondi coopérante. Et pour la fixation par les boulons 20 de la pièce 2 sur le corps 1, sont formés quatre orifices 25 en regard des trous filetés 19 du corps.

En se référant maintenant aux figures 1 et 2, on décrira plus précisément les bagues d'étanchéité 3 qui coopèrent avec la pièce 2 formant couvercle pour la protection des garnitures d'étanchéité.

La bague 3 comporte intérieurement, comme la pièce 2, une gorge arrondie 35 pour la réception du joint d'étanchéité en caoutchouc 10. La pièce 3 comporte également un logement 26 pour un joint torique 34 d'étanchéité autour du manchon 5 (figure 1).

En se référant maintenant aux figures 1, 2 et 6, on décrira plus précisément les bagues d'arrêt 4.

Ces bagues d'arrêt comportent des moyens permettant leur blocage en translation sur le manchon 5.

Ces moyens sont constitués par des orifices filetés 27, au nombre de trois dans l'exemple illustré, répartis angulairement autour de la bague 4 et dans lesquels viennent s'insérer des vis 28 qui pénètrent dans des orifices filetés 29 formés vers ses extrémités dans le manchon 5.

La bague 4 comporte également notamment trois autres orifices filetés 30 répartis à 120° tout autour de l'axe de la bague et taraudés parallèlement à l'axe X' X du dispositif.

Dans ces trous filetés peuvent être introduites trois vis 31 qui permettront le réglage et le positionnement en pression de la bague d'étanchéité 3 sous la paroi 23 de la pièce 2 de façon à serrer les garnitures d'étanchéité et les maintenir convenablement dans leur logement 12.

A la figure 2, on aperçoit également précisément comment sont constituées les garnitures d'étanchéité avec leur deux chemins de portée 8, 9 en acier permettant le glissement sur le manchon 5 et les joints toriques en caoutchouc 10, 11 assurant l'étanchéité du montage.

On décrira maintenant rapidement l'assemblage et le montage du dispositif.

On monte d'abord le roulement 7 sur le manchon 5 et on le positionne au moyen des circlips 13 à l'intérieur du corps de palier 1.

On positionne ensuite de part et d'autre les deux pièces 2 formant couvercles de protection des garnitures d'étanchéité et l'on verrouille par les boulons 20 les deux pièces 2 sur le corps de palier.

On introduit ensuite les garnitures d'étanchéité en les faisant glisser sur le manchon 5 avec les chemins de portée 9 et les joints 11 d'abord et ensuite les chemins de portée 8 avec les joints 10.

On glisse ensuite de part et d'autres les deux bagues d'étanchéité 3 en engageant leur face extérieure cylindrique circulaire 32 contre et sous la face intérieure 33 de la paroi 23 de couvercle 2 avec un certain jeu permettant la rotation de la bague 3 à l'intérieur de la pièce 2.

On engage ensuite les deux bagues extérieures 4 que l'on verrouille en position sur le manchon 5 au moyen des vis 28, après quoi, au moyen des vis 31, on règle la pression latérale de la bague 3 sur les garnitures d'étanchéité 10, 11 portées par leurs chemins 8, 9.

Le chemin 8 tourne librement avec le manchon 5 lorsque l'arbre de rotation de la machine tourne, tandis que le chemin 9 glisse librement sur le manchon.

## Revendications

1. Dispositif d'étanchéité pour un élément extérieur recevant un arbre (6) dans un roulement (7) du type comprenant, disposées de chaque côté du roulement (7), des garnitures d'étanchéité (8 - 11) entourant l'arbre, ledit dispositif comportant :
- un élément extérieur (1) recevant intérieurement le roulement (7),
- de part et d'autre dudit élément extérieur (1) une pièce (2) formant couvercle de protection des garnitures d'étanchéité (8 - 11), comportant, faisant saillie d'un côté, une joue (21) s'engageant en étanchéité dans l'élément extérieur (1) et, faisant saillie de l'autre côté, une paroi de protection (23) des garnitures (8 - 11),
- des garnitures d'étanchéité (8 - 11) logées dans un logement (12) formé sous ladite paroi (23),
- une bague extérieure (3) coopérant avec les garnitures pour les enfermer dans ledit logement (12), ledit dispositif étant caractérisé en ce que, s'agissant d'un dispositif d'étanchéité pour palier de machine recevant un arbre (6) tournant dans un roulement (7), la bague extérieure (3) coopère en étanchéité avec ladite paroi (23) de protection des garnitures en présentant une paroi (32) qui vient se loger sous la paroi (23) de protection de la pièce (2) formant couvercle de protection des garnitures.

2. Dispositif selon la revendication 1, caractérisé en ce que les garnitures d'étanchéité comportent deux chemins de portée (8, 9) supportant des joints d'étanchéité (10, 11) tels que des joints toriques en caoutchouc assurant l'étanchéité respectivement avec ladite pièce formant couvercle (2) et avec ladite bague (3).

3. Dispositif selon la revendication 1 ou la revendication 2, caractérisé en ce qu'il comprend en outre à l'extérieur desdites bagues d'étanchéité (3) une bague d'arrêt (4) desdites bagues d'étanchéité.

4. Dispositif selon l'une quelconque des revendications précédentes, caractérisé en ce que l'ensemble des pièces est monté autour d'un manchon cylindrique circulaire (5) qui reçoit l'arbre de rotation (6) de la machine.

5. Dispositif selon l'une quelconque des revendications précédentes, caractérisé en ce que l'ensemble des pièces est symétrique par rapport à un plan médian Y' Y du corps de palier (1) et perpendiculaire à son axe X' X.

6. Dispositif selon la revendication 4 ou la revendication 5, caractérisé en ce que lesdites bagues d'arrêt (4) comportent des moyens de blocage en translation sur le manchon (5) et des moyens de réglage parallèlement à l'axe faisant pression sur la bague d'étanchéité adjacente (3) pour son positionnement contre ledit couvercle (2).

7. Dispositif selon la revendication 2 et l'une quelconque des revendications 4 à 6, caractérisé en ce que lesdits deux chemins de portée (8, 9) sont montés à glissement sur ledit manchon (5).

8. Dispositif selon l'une quelconque des revendications 4 à 7, caractérisé en ce qu'il est formé dans le manchon (5) des gorges circulaires (14) pour le logement de circlips (13) de positionnement du roulement (7).

9. Dispositif selon la revendication 3 et l'une quelconque des revendications 4 à 8, caractérisé en ce que ledit manchon (5) comporte des moyens de positionnement des bagues d'arrêt (4), tels que des orifices filetés (29) vers ses extrémités, pour la réception de vis ou boulons (28) de montage sur le manchon (5).

## Patentansprüche

1. Dichtungsvorrichtung für ein Außenelement, welches eine Welle (6) in einem Lager (7) aufnimmt, mit an jeder Seite des Lagers (7) angeordneten Dichtungsarmaturen (8-11), welche die Welle umgeben, wobei die Vorrichtung aufweist:
- ein Außenelement (1), welches innen das Lager (7) aufnimmt,
- auf beiden Seiten des Außenelementes (1) ein Teil (2), welches eine Schutzabdeckung für die Dichtungsarmaturen (8 - 11) bildet, mit einer von der einen Seite vorspringenden Backe (21), die dicht in dem Außenelement (1) in Eingriff kommt, und mit einer Schutzwand (23) für die Armaturen (8 - 11) welche von der anderen Seite vorspringt,
- Dichtigkeitsarmaturen (8 - 11), die in einem Sitz (12) angeordnet sind, der unter der Wand (23) gebildet ist,
- ein Außenring (3), welcher mit den Armaturen zusammenwirkt, um sie in dem Sitz (12) einzuschließen, wobei die Vorrichtung **dadurch gekennzeichnet** ist, daß es sich um eine Dichtungsvorrichtung für Maschinenlager handelt zur Aufnahme einer Welle (6), die in einem Lager (7) dreht, der Außenring (3) dicht mit der Schutzwand (23) der Armaturen zusammenwirkt, indem er eine Wand (32) aufweist, die unter der Schutzwand (23) des Teils (2) angeordnet ist, welche die Schutzabdekkung der Armaturen bildet.

2. Vorrichtung nach Anspruch 1, **dadurch gekennzeichnet**, daß die Dichtungsarmaturen zwei Tragbahnen (8, 9) aufweisen, welche Dichtungsverbindungen (10, 11) stützen, wie zum Beispiel torische Gummidichtungen, welche die Dichtigkeit jeweils mit dem die Abdeckung (2) bildenden Teil und dem Ring (3) sicherstellen.

3. Vorrichtung nach Anspruch 1 oder Anspruch 2, **dadurch gekennzeichnet**, daß sie ferner außerhalb der Dichtungsringe (3) einen Stellring (4) für die Dichtungsringe aufweist.

4. Vorrichtung nach einem der vorhergehenden Ansprüche, **dadurch gekennzeichnet,** daß die Gesamtheit der Teile um eine zylindrische, kreisförmige Muffe (5) angebracht ist, welche die Rotationswelle (6) der Maschine aufnimmt.

5. Vorrichtung nach einem der vorhergehenden Ansprüche, **dadurch gekennzeichnet,** daß die Gesamtheit der Teile bezüglich einer Mittelebene Y' Y des Lagerkörpers (1) und senkrecht zu seiner Achse X' X symmetrisch ist.

6. Vorrichtung nach Anspruch 4 oder Anspruch 5, **dadurch gekennzeichnet**, daß die Stellringe (4) Sperrmittel in Verschiebung auf der Muffe (5) aufweisen und Steuerungsmittel parallel zu der Welle, die auf den angrenzenden Dichtungsring (3) für sein Positionieren gegen die Abdeckung (2) Druck ausüben.

7. Vorrichtung nach Anspruch 2 und einem der Ansprüche 4 bis 6, **dadurch gekennzeichnet,** daß die zwei Tragbahnen (8, 9) gleitend auf der Muffe (5) angebracht sind.

8. Vorrichtung nach einem der Ansprüche 4 bis 7, **dadurch gekennzeichnet,** daß in der Muffe (5) kreisförmige Vertiefungen (14) für den Sitz von Sicherungsringen (13) für die Positionierung des Lagers (7) gebildet sind.

9. Vorrichtung nach Anspruch 3 und einem der Ansprüche 4 bis 8, **dadurch gekennzeichnet,** daß die Muffe (5) Positionierungsmittel für die Stellringe (4), wie zum Beispiel Gewindeöffnungen (29), zu seinen Enden hin für die Aufnahme von Montageschrauben oder -bolzen (28) auf der Muffe (5) aufweist.

## Claims

1. Sealing device for an outer element receiving a shaft (6) in a rolling bearing (7) of the type comprising, arranged on each side of the rolling bearing (7), sealing gaskets (8 - 11) surrounding the shaft, the said device including:
- an outer element (1) receiving the rolling bearing (7) internally,
- on either side of the said outer element (1) a part (2) forming a cover for protecting the sealing gaskets (8 - 11), including, projecting from one side, a flange (21) sealingly engaging in the outer element (1) and, projecting from the other side, a wall (23) for protecting the gaskets (8 - 11),
- sealing gaskets (8 - 11) lodged in a seating (12) formed beneath the said wall (23),
- an outer ring (3) co-operating with the gaskets to enclose them in the said seating (12), the said device being characterized in that, being a sealing device for a machine bearing receiving a shaft (6) turning in a rolling bearing (7), the outer ring (3) co-operates sealingly with the said wall (23) for protecting the gaskets by having a wall (32) which comes to bear beneath the wall (23) for protecting the part (2) forming a cover for protecting the gaskets.

2. Device according to Claim 1, characterized in that the sealing gaskets have two bearing tracks (8, 9) supporting seals (10, 11) such as rubber O-rings providing a leaktight seal respectively with the said part forming a cover (2) and with the said ring (3).

3. Device according to Claim 1 or Claim 2, characterized in that it additionally comprises on the outside of the said sealing rings (3) a stop ring (4) for the said sealing rings.

4. Device according to any one of the preceding claims, characterized in that the assembly of the parts is mounted round a circular cylindrical sleeve (5) which receives the rotation shaft (6) of the machine.

5. Device according to any one of the preceding claims, characterized in that the assembly of the parts is symmetrical with respect to a median plane Y' Y of the bearing body (1) and perpendicular to its axis X' X.

6. Device according to Claim 4 or Claim 5, characterized in that the said stop rings (4) include means for blocking in translation on the sleeve (5) and means for adjustment parallel to the axis exerting pressure on the adjacent sealing ring (3) to position it against the said cover (2).

7. Device according to Claim 2 and any one of Claims 4 to 6, characterized in that the said two bearing tracks (8, 9) are slidingly mounted on the said sleeve (5).

8. Device according to any one of Claims 4 to 7, characterized in that in the sleeve (5) circular channels (14) are formed for the seating of circlips (13) for positioning the rolling bearing (7).

9. Device according to Claim 3 and any one of Claims 4 to 8, characterized in that the said sleeve (5) includes means for positioning the stop rings (4), such as threaded openings (29) towards its ends, to receive screws or bolts (28) for mounting on the sleeve (5).
